# EUROPEAN PATENT APPLICATION

(11) **EP 1 031 910 A1**
(43) Date of publication of application: **30.08.2000**
(21) Application number: 99310244.1
(22) Date of filing: 20.12.1999
(51) Int. Cl.: G06F 1/00

(54) **Software program protection mechanism**

(30) Priority: 22.12.1998 US 218413
(71) Applicant: NETACTIVE INC., Nepean, Ontario K2E 8C4 (CA)
(72) Inventor: Larose, Gordon Edward, Ottawa Ontario K2C 0E3 (CA); Thomson, Scott Alan, Ottawa Ontario K2A 1T9 (CA)
(74) Representative: Cross, Rupert Edward Blount

(57) **Abstract**

An improved software protection mechanism is disclosed whereby both the "asset files" of a software program and the core executable program itself are transformed in such a way that any redistribution of the modified executable program would also require redistribution of the corresponding transformed asset files. In operation, a file transformation module is used to intercept any file activity from the operating system. The file transformation module will perform the required reverse transformation only if the invoking request to the operating system is identified as being for transformed data bound to or from the modified executable program. A protection module containing asset lists, calling process identification information, transformation keys, and optionally other information such as transformation algorithms is used in association with the file transformation module.

## Description

### Field of the Invention

The present invention relates to a protection mechanism to prevent unauthorized modification and/or redistribution of computer software programs.

### Background of the Invention

In the field of commercial software, especially software for consumer personal computers or "PCs", it is common to distribute free or low-cost demonstration versions of software programs for marketing purposes. Software publishers distribute large numbers of such demonstration versions in order to expose many potential buyers to their software. The rationale is that the low cost of distribution is more than offset by the additional purchase revenue likely to be generated by users who try the software, like it, and decide to buy it. Such demonstration versions are sometimes distributed over the Internet, but physical media such as diskette, CD-ROM or DVD (Digital Versatile Disc) are more commonly used. Such physical media are inexpensive, they can be easily targeted to a specific audience, and, unlike downloads supportable via most consumer Internet connections, they have enough capacity to distribute a large demonstration version which is sufficiently full-functioned to trigger a sale.

Such demonstration software programs have the following characteristics: i. the distribution form of the demonstration software program includes a full-function version of the software program; ii. all distributed copies of the demonstration software program are identical; iii. upon normal installation, the software program provides a demonstration mode which includes one or more restrictions (functionality, time, number of users, etc.); iv. a means is provided by which the user can acquire a fully-licensed version of the software, and convert the demonstration version to a full version without the need for delivery of additional media; v. The demonstration software programs do not rely on any special hardware support, but will run (and convert to full-function versions) on a normal consumer PC.

Typically, most such demonstration distributions of software actually contain all the functionality of the full-price version, with software protection mechanisms embedded therein which are designed to prevent access to the full version until sale. This is done for two reasons. First, software publishers want to avoid the expense of different software development streams, one for demonstration and one for "full" versions of the software. Second, software publishers want users to be provided with the means to convert a demonstration version into a full version, without the need for further delivery of software to the user.

While the system described thus far can be an effective marketing tool, it has a serious disadvantage. Such demonstration media are a major source of working material for software pirates. It is usually possible for a software pirate to modify the demonstration version so as to circumvent whatever protection mechanism has been embedded by the software publisher. When demonstration versions of software have been so modified, full program functionality latent in the distributed form of the program is unlocked, without the publisher receiving any consideration. Furthermore, once a software pirate successfully circumvents the protection mechanism employed by the software publisher, a piracy-assisting package called a "crack" can be created to assist others to similarly convert a demonstration software program to a full version without payment to the publisher. The practice of freely distributing "cracks" is sufficiently widespread that software publishers recognize it as a significant source of revenue loss.

There are several well-known protectionist countermeasures known in the art designed to make a demonstration form of a software program resistant to piracy attacks. Typically, such protectionist techniques consist of adding extra internal functions to the binary executable form of the software program, which enforce demonstration restrictions. The desired result is that any unauthorized modifications designed to sidestep the demonstration restrictions, would be detected and result in, for example, specific screens being displayed, or automatic program failure. However, the binary executable program (for example, the file with an extension of ".EXE" in the Windows™ operating system) is usually only a very small component of the overall software program. In most consumer software applications, an executable file is about one megabyte in size, while the data files and other files necessary for program execution can exceed several hundred megabytes overall. Thus, by protecting only the core binary executable file of a software program, only a very small proportion of the demonstration version of the software is actually protected from piracy.

If a software program protected according to the current art is freely distributed, then the simplest form of "crack" is simply to replace the protected core binary executable file with an unprotected equivalent unprotected version, which can be obtained via a single legitimate purchase. This form of crack is easily produced without the need for great technical skill. This constitutes a significant weakness for the current art in software protection schemes.

Alternative software protection mechanisms employ cryptographic techniques. While cryptography is an adequate solution for the one-time transmission of computer messages, it is not generally adequate as a software protection mechanism. This is because the cryptographic keys required by cryptographic systems are inherently liable to discovery, since they must be applied every time a protected software program is run.

Thus, a need exists for an improved software protection mechanism.

### Summary of the Invention

The present invention provides an improved software protection mechanism for computer software programs. What is disclosed is a system for transforming the "asset files" of a software program (i.e. the data files) and modifying the core executable program itself, in such a way that any redistribution of the modified executable program would also require redistribution of the corresponding transformed asset files. A redistribution composed of the modified executable file along with non-transformed (i.e. original form) asset files (and vice versa) would not operate.

To create a distribution form of a protected software application, the application is first broken up into its main constituent elements, namely the core executable program and the asset files (read-only data files and/or read/write data files). Using a transformation key, a transformation function is applied to the asset files to create transformed data files. The transformation key is then stored for later use. A modified executable program is then formed by embedding into the core executable program a call to the execution of a protection module program. The protection module program may only be invoked upon the execution of said modified executable program, and will not operate under any other conditions. A file transformation module program is then generated and added to the bundle of software elements. The transformation keys and list of transformed data files may optionally be added to the protection module program. The bundle of software elements (comprising the transformed data files, transformation keys, modified executable program, protection module program and file transformation module program) are then transferred to a medium for distribution to a user.

In operation on a computer system, the modified executable program is loaded, which automatically causes the protection module program to be run. The protection module invokes the operation of the file transformation module, which is designed to intercept requests for file operations (such as, for example, file-READ, file-WRITE, file-OPEN and file-CLOSE) made by the modified executable program to the computer system's operating system. Using the transformation key, the file transformation module will perform the required reverse transformation only if the file operation request is identified as being for transformed data.

Through the use of the protection module program, the present invention connects the modified executable program to the transformed data files. As such, under no circumstances will the file transformation module perform the required reverse transformation except in the presence of, and under the control of the modified executable program.

Other aspects and features of the present invention will become apparent to those ordinarily skilled in the art upon review of the following description of specific embodiments of the invention in conjunction with the accompanying figures.

### Brief Description of the Drawings

Preferred embodiments of the invention will now be described with reference to the attached drawings in which:
Figure 1 is a block diagram of a typical installation and run-time structure of a software program without a protection mechanism;
Figure 2 is a block diagram of an installation and run-time structure of a software program with the addition of a typical software protection mechanism;
Figure 3 is a block diagram of an installation and run-time structure of a software program with the addition of a software protection mechanism for asset files;
Figure 4 is a block diagram of one embodiment of the software protection mechanism of the present invention;
Figure 5A is a flow chart of the initialization steps of the present invention;
Figure 5B is a flow chart of the operational steps taken by the transformation module of the present invention;
Figure 5C is a flow chart of the termination steps of the present invention;
Figure 6 is a block diagram showing the process by which a software program has its assets transformed according to the method of this invention; and
Figure 7 is a flow chart of the file transformation process shown in Figure 6.

### Detailed Description of the Preferred Embodiments

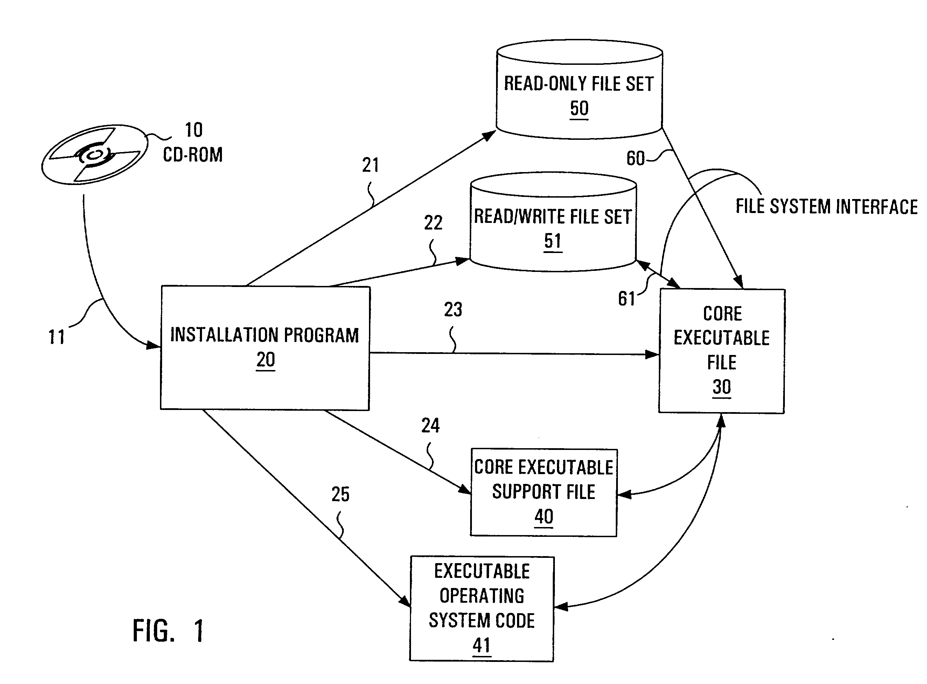

Figure 1 is a block diagram of a typical installation and run-time structure of a software program without a protection mechanism. Such software programs are usually distributed on CD-ROM 10, or other physical media. It is immaterial to the present invention whether the distribution source is other than CD-ROM (e.g. DVD, Internet download, etc.), but a CD-ROM is used for ease of description.

An installation program 20 is run from CD-ROM 10, which reads 11 the CD-ROM 10, and copies (21, 22, 23, 24, and 25) to the internal disk of the user's PC, core executable program 30 and a number of file sets 40, 41, 50 and 51. The core executable program 30 will typically rely on executable operating system code in support of the core executable program 41, which may have been updated or initially installed by the installation program 20, or may already have been in place on the user's PC. An example would be the DirectX™ graphics facility of Microsoft Windows™. The core executable program 30 will also typically rely on core executable support files 40, also installed by the installation program 20. An example would be one or more Dynamic Linked Libraries (DLLs) for use of the specific application in the Windows™ operating system.

To run properly, the core executable program 30 will typically interact with and manipulate data files. For example, a read/write file set 51 is shown being accessed via file system interface 61, and a read-only file set 50 is shown being accessed via file system interface 60. File sets 50 and 51 are known as "asset files". No software protection mechanism is shown in Figure 1, which means that the software application can be easily copied and distributed without difficulty.

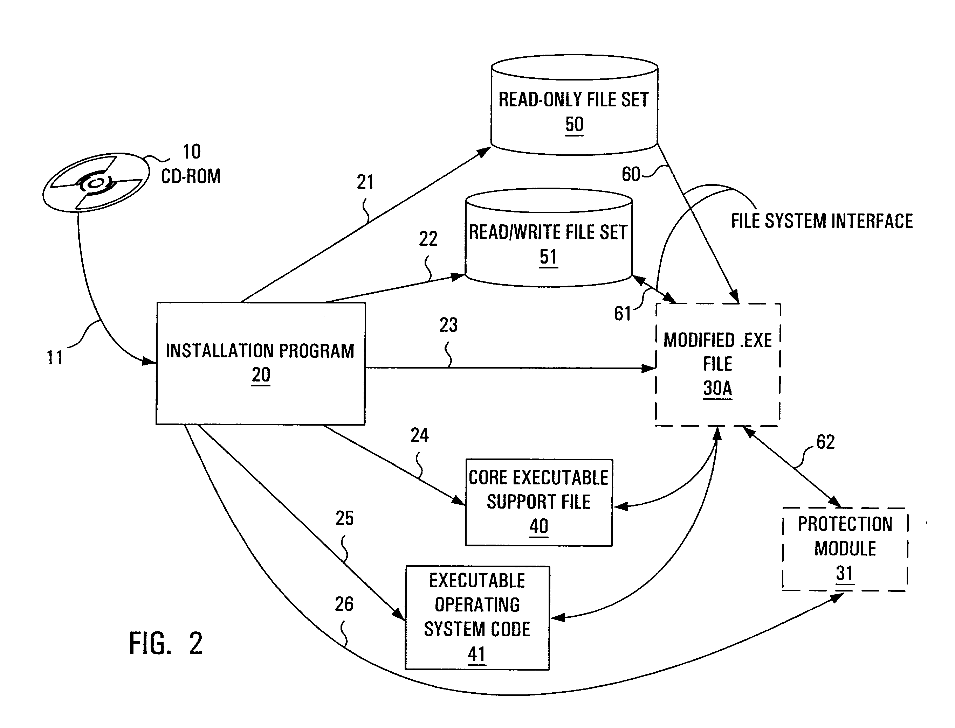

Figure 2 is a block diagram of an installation and run-time structure of a software program with the addition of a typical software protection mechanism known in the art. With the exception of modified executable file 30A and protection module program 31 (hereinafter referred to as "protection module 31"), all the elements of Figure 2 are the same as those described in Figure 1. The dashed line outline of components 30A and 31 is a visual aid to convey the fact that these components are protected.

In Figure 2, modified executable program 30A is modified relative to the original core executable file 30 in Figure 1 in some fashion to protect the file's integrity. Commonly, an additional protection support module executable component ("protection module") 31 is installed 26 and used at run-time 62 under the control of the modified executable program 30A. The protection module 31 is not always in use during program execution, but in a typical implementation would monitor and/or set-up the functioning of modified executable program 30A to ensure compliance with pre-set restrictions while the program was in demonstration mode.

The weakness of the system illustrated in Figure 2 is that, if the protected executable program 30A is replaced by a copy of the original core executable program 30, then all protection is lost and the resulting application will have unlicensed full functionality. The protection functions provided by protection module 31 will be lost, even if that component is still present. This is because such protection functions are only invoked by modified executable program 30A and will remain dormant if unprotected original core executable program 30 is used in the place of modified executable program 30A.

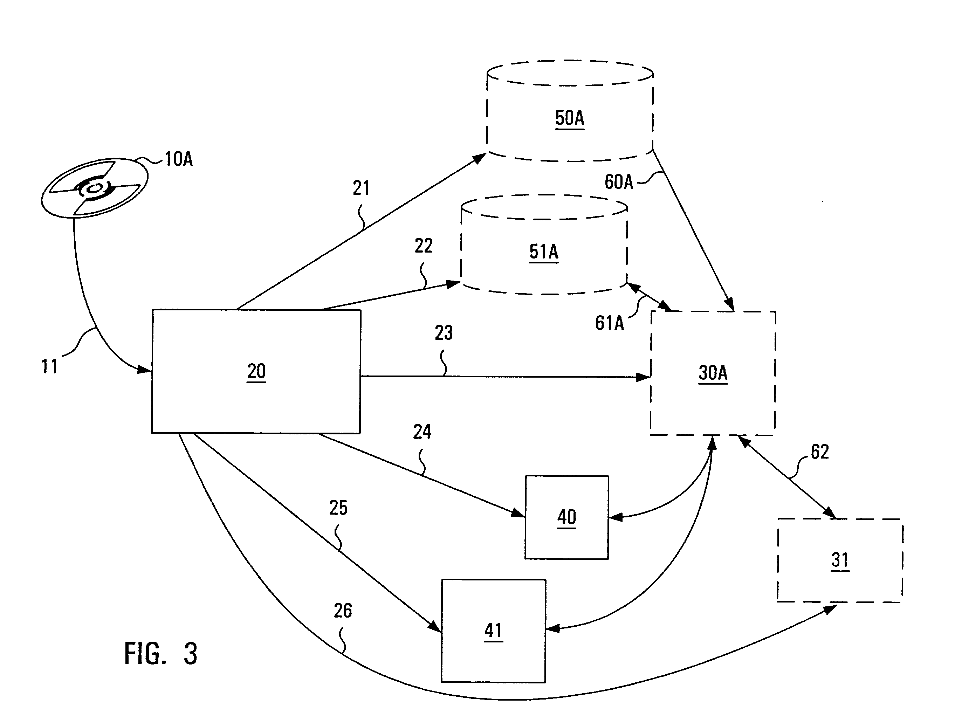

Figure 3 is a block diagram of an installation and run-time structure of a software program with the addition of a software protection mechanism for asset files. Only elements 20, 40 and 41 of Figure 3 are the same as those described in Figures 1 and 2. Except for CD-ROM 10A, the remaining elements are shown in dashed line outline, which is meant to indicate that they are protected in accordance with the software protection mechanism of the present invention. CD-ROM 10A is the distribution medium for the protected software. As in Figure 2, the modified executable program 30A is modified relative to original core executable program 30 in Figure 1 in some fashion to protect the file's integrity. Commonly, an additional protection support module executable component ("protection module") 31 is installed 26 and used at run-time 62 under the control of the modified executable program 30A.

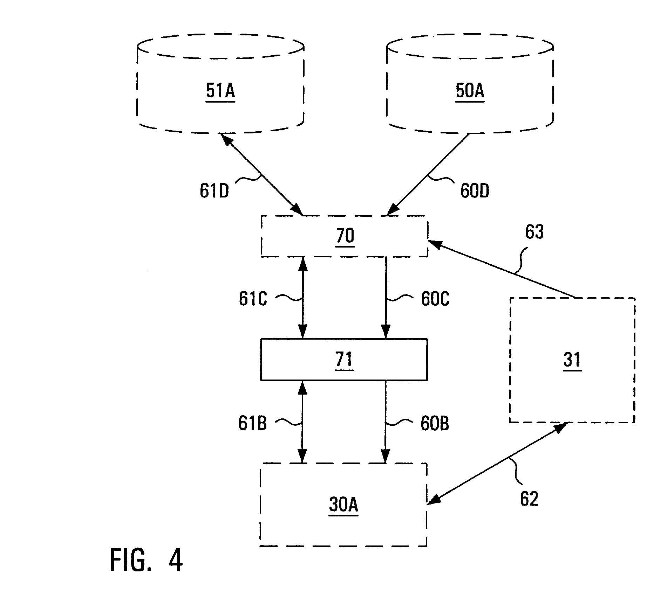

In Figure 3 file sets 50 and 51 of Figure 2 (the "asset files") are replaced by transformed file sets 50A and 51A. There may be one or more transformed data files in transformed file sets 50A and 51A. Transformed file sets 50A and 51A, which may include any format of file, including even executable files,
are accessed by the modified executable program 30A via interface read/write function 60A and interface read-only function 61A (through transformation module 70 shown in Figure 4) which provide appropriate run-time transformations and inverse transformations. It will be appreciated by one skilled in the art that the exact nature of the transformations and inverse transformations is not fundamental to the invention. For example, the transformations could involve encryption and decryption using standard algorithms such as Data Encryption Standard (DES) or Rivest Shamir Adelman (RSA), or other less complex encryption and decryption algorithms. A mix of different transformations could also be used for the same application. The only real requirements are that the transformations be reversible and that they provide an appropriate balance between performance and security for the software program. For example, a simple transform might consist of applying byte-by-byte logical operations such as bit shifts or EXCLUSIVE OR operations with secret byte values to the transformed buffered data to produce cleartext data. Interface functions 60A and 61A, which provide the required run-time transformations, may be implemented in various ways. For example, the required transformations may be built-in at the source code or library level to the modified executable program 30A. They could also be inherently provided by the operating environment, or in conjunction with special media.

Figure 4 is a block diagram of one embodiment of the software protection mechanism of the present invention. Shown in Figure 4 are transformed file sets 50A and 51A, modified executable program 30A, and protection module 31 which are all similar to that of Figure 3. Some of the elements of Figure 3 are omitted from Figure 4 for visual clarity but are logically present and unchanged in the scenario of Figure 4. Interface read-only functions 60B, 60C, 60D and interface read/write functions 61B, 61C, 61D are those which provide appropriate run-time transformations and inverse transformations in accordance with the present invention.

In this embodiment, interface functions 60B, 60C, 60D and 61B, 61C, 61D are provided in a fashion that is transparent to the modified executable program 30A. That is, the code within the modified executable program 30A that uses the transformed file sets 50A and 51A, can be left in its original form, because file input/output as seen by that code according to the present invention is identical to that which would be seen with no protection in place. This is done by means of operating system 71 and file transformation module program 70 (hereinafter referred to as "file transformation module 70") which intervene in the reading and writing of file operations via interfaces 60B, 60C and 61B, 60C. Operating system 71 (for example, Microsoft Windows 95™ or 98) and file transformation module 70 are the means by which file transformation is attached transparently to file operations.

There are various ways in which file transformation module 70 could be implemented. However, in accordance with this embodiment of the present invention, the objectives of this module are: i. To make file transformation completely transparent to the modified executable program 30A that is, no modifications have been made to the program as a result of the file transformations; and, ii. to provide file transformation services only under appropriate circumstances, which, in this case, only to a legitimate modified executable program 30A. Transformations will not be performed on behalf of other executable programs, such as the original core executable program 30, or to non-affected assets such as files belonging to unrelated programs. The means by which these objectives are met is through the initialization and execution logic of file transformation module 70 as described below.

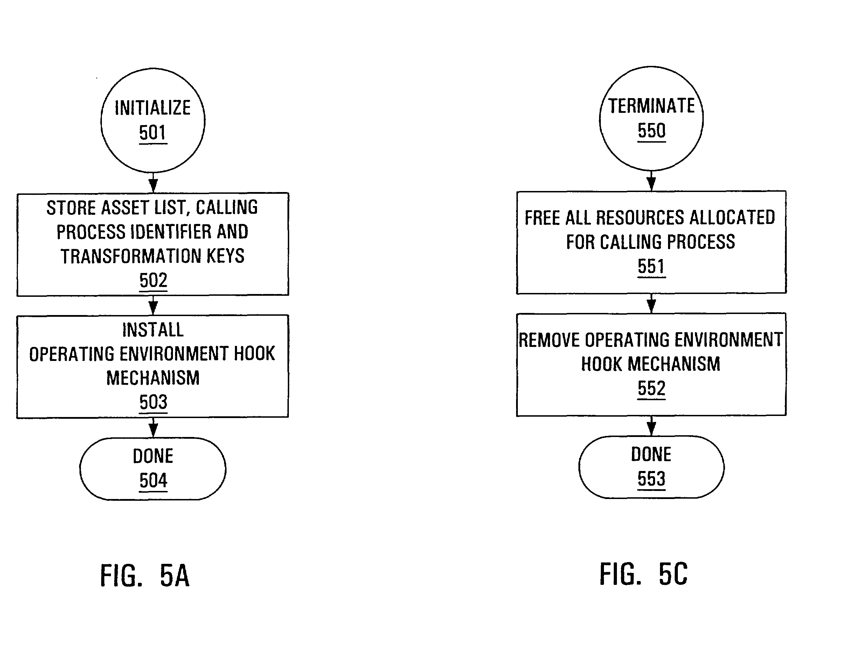

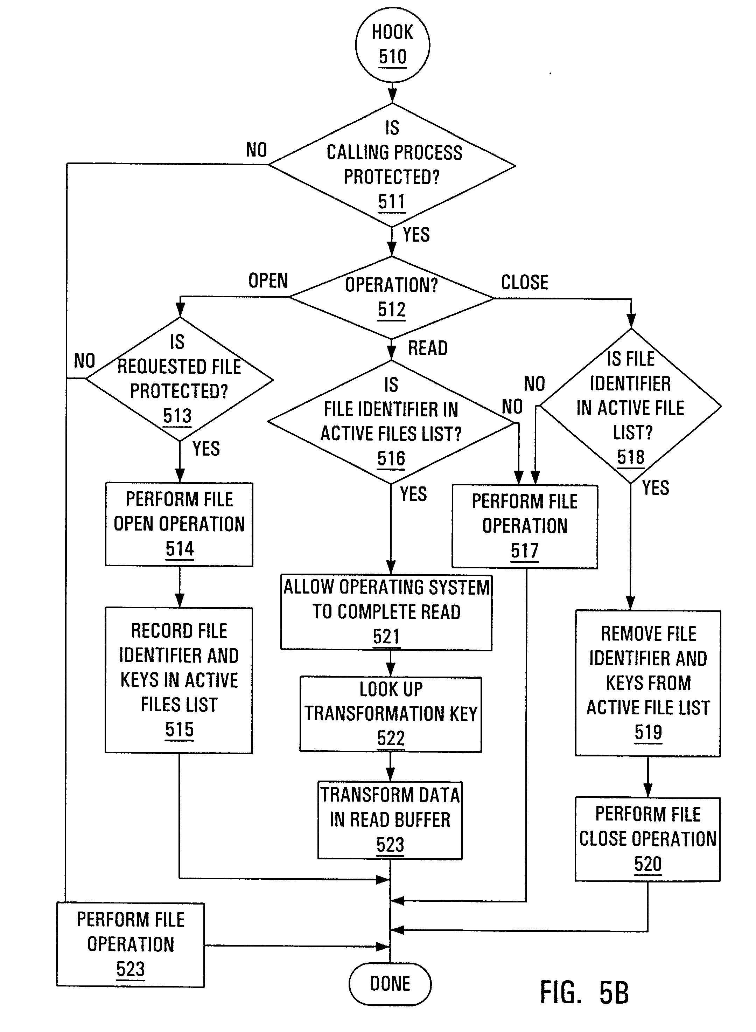

The operational logic of file transformation module 70 is shown in the flow charts of Figures 5A, 5B and 5C. There are three distinct phases of operation: initialization (Figure 5A), file hook handling (Figure 5B) and termination (Figure 5C).

File transformation module 70 must be initialized before it can intercept any file activity from the operating system 71. It is important to note that the protection module 31 is only active in the presence of, and as a result of running, the modified executable program 30A. For example, for the Windows™ operating system, the protection module 31 could be a Dynamically Linked Library (DLL) file, which could be added to the "import table" of the original executable program 30, as part of the conversion process by which the modified executable program 30A is produced. This would have the effect, via inherent behaviour of the "loader" in the Windows™ operating system, of running specific code in protection module 31 automatically when the modified executable program 30A was first invoked, before any of the actual run-time binary instructions of modified executable program 30A were executed. No other program will cause protection module 31 to run, and since protection module 31 sets up file transformation module 70 via the calls under discussion here, file transformation module 70 will not be set-up to provide service to any other programs. Notably, original core executable program 30 will not invoke protection module 31 or the transformation services that it triggers.

As shown in the flow chart in Figure 5A, at steps 501 and 502 protection module 31 first initializes file transformation module 70. At this stage, information would be passed by protection module 31 to file transformation module 70. Such information would include asset lists (i.e. members of transformed file sets 50A and 51A), calling process identification information, transformation keys, and optionally other information such as transformation algorithms. The calling process information would be obtained from the operating system 71, and the asset-related information could be embedded in protection module 31, or obtained by protection module 31 by reading other files. Note that the asset-related information could also be obtained by file transformation module 70 by other means, for example, it could be read from files directly by file transformation module 70, or embedded into file transformation module 70 itself. In this embodiment, at step 503 protection module 31 uses available operating system services to "hook" the file transformation module 70 into the file system. For example in Windows 95™ or Windows 98™, file transformation module 70 could be a Virtual Device Driver (VxD), and protection module 31 could use Windows™ "Virtual File System" calls to arrange that the operating system invokes file transformation module 70 as part of the low-level sequence of operations performed on subsequent file system calls. As another example, a software interrupt handler in a "Terminate and Stay Resident" (TSR) program for Interrupt 13 hexadecimal could be used for the Microsoft Disk Operating System (MS-DOS™). With respect to Figure 4, this hook mechanism is the means whereby interface read/write function 61B and interface read-only function 60B to the operating system 71 are intercepted at interface functions 60C and 61C by the file transformation module 70. In this embodiment, such "hooks" (or interceptions) are reached whenever a file-READ, file-WRITE, file-OPEN or file-CLOSE operation is performed. The initialization process is then completed at step 553. The hook having been established, and file transformation module 70 initialized, file transformation module 70 is automatically invoked on any subsequent file request.

Once initialized, file transformation module 70 will receive file operation requests that are directed at operating system 71. File transformation module 70 will perform the required reverse transformation (i.e. "transformation services") only if the invoking request to operating system 71 was identified as being for transformed data bound to or from the modified executable program 30A. If file transformation module 70 determines that the request is not for transformed data bound to or from the modified executable program 30A, the intercepted request would be returned to the operating system 71 for normal processing. In all cases, file transformation module 70 is invoked in such a way that the file data (if any) associated with the operation has already been placed by operating system 71 in a memory buffer known to file transformation module 70. File transformation module 70 then has the option of applying transforms to this buffered data, or simply returning to the operating system and leaving the data in the as-found state.

The exact set of file operations of interest to file transformation module 70 would vary with different implementations of this invention. At a minimum, the file-OPEN, file-READ, and file-CLOSE operations are relevant. Other operations, including the file-WRITE operation, can also be used as triggers via the same operating system hooks that invoke file transformation module 70.

Further information concerning these file operations follows: (i) file-OPEN: Operating system environments such as Microsoft DOS™, Microsoft Windows™, and Unix™ use the concept of integer file identifiers to keep track of opened files. File-OPEN requests that originate from the secured process (i.e. modified executable program 30A), for files that are listed in the process's asset list (i.e. transformed file sets 50A and 51A), will cause file transformation module 70 to record the unique file identifier designated by operating system 71 for the opened file to be recorded along with the associated transformation keys and to add this file to an active files list; (ii) file-READ: The data returned by operating system 71 is decrypted by file transformation module 70 when a file-READ operation with a unique file identifier as established in the file-OPEN phase above, occurs for a unique identifier of a protected asset file. This is accomplished by allowing operating system 71 to complete the read operation to the destination buffer specified by the calling process and subsequently transforming the data in-place (that is, in the same destination buffer) with the asset file's associated keys; (iii) file-WRITE: Although the handling of the file-WRITE operation is not shown in Figure 5B, it is similar to the file-OPEN operation. The transformation module 70 reverse-transforms the data in-place in the calling processes' data buffer prior to calling the operating system environment to perform the actual file-WRITE operation; and (iv) file-CLOSE: The resources used to store the file identifier and keys for an opened protected asset file are discarded when the transformation module 70 receives a request to close that file.

Figure 5B is a flow chart of the operational steps taken by file transformation module 70 of the present invention. At step 510, a "hook" to file transformation module 70 is activated by the operating system 71. If file transformation module 70 determines that the request is not for transformed data bound to or from the modified executable program 30A, the intercepted request would be returned to the operating system 71 for normal processing at steps 523 and 525.

If, however, the calling process is protected (i.e. the request is for transformed data bound to or from the modified executable program 30A), then an analysis of the file operation is performed at step 512. Note that in Figure 5B, the only operations shown to be effected are file-OPEN, file-CLOSE and file-READ. Other operations, including the "file-WRITE" operation, can also be similarly intercepted.

If the operation is file-READ, a determination is made at step 516 whether the file identifier is in the active files list. If not, the intercepted request would be returned to the operating system 71 for normal processing at steps 517 and 525. If the file identifier is in the active files list, file transformation module 70 returns to the operating system 71 at step 521 to allow it to complete the low-level read in the normal manner, but in such a way that it returns to the control of file transformation module 70 (via logic of file transformation module 70 not shown) at step 522. The correct transformation key for this asset is determined at step 522, and the data in the read buffer is transformed at step 523. Said data will have been placed there by operating system 71 in the normal course of the read operation which was "hooked" to invoke file transformation module 70. The process is then completed at step 525.

If the operation is file-CLOSE, a determination is made at step 518 whether the file identifier is in the active files list. If not, the intercepted request would be returned to the operating system 71 for normal processing at steps 517 and 525. If the file identifier is in the active files list, then at step 519 the file identifier and transformation keys are removed from the active files list. At step 520, the file-CLOSE operation is performed. The process is then completed at step 525.

Figure 5C is a flow chart of the termination steps of the present invention. To terminate, at step 551 all resources allocated for the calling process are freed, and at step 552 the operating system environment hook mechanism is removed. The termination process is then completed at step 553.

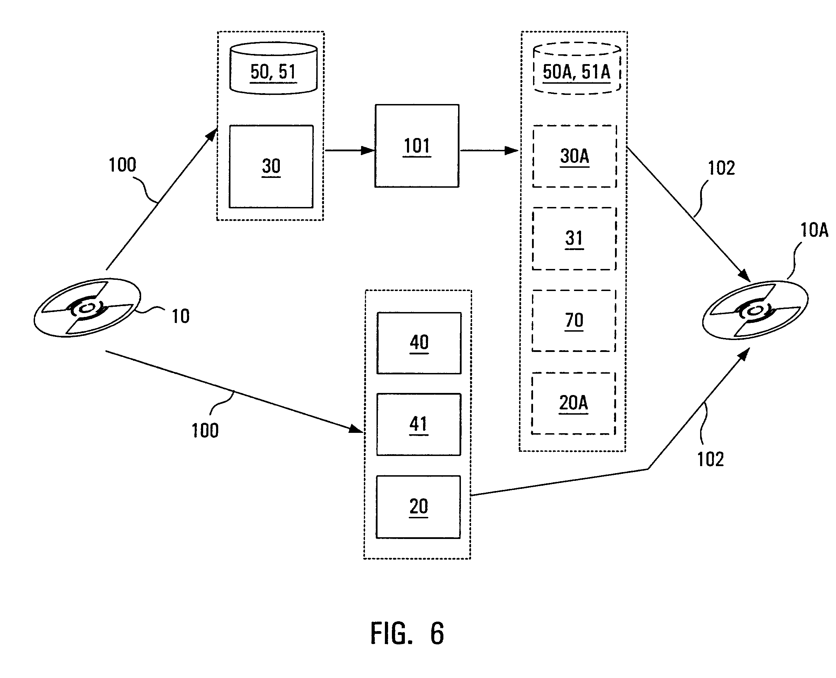

Figure 6 is a block diagram showing the process by which a software program has its assets transformed according to the method of this invention. This is the pre-distribution transformation process which transforms a software program into its distribution state (see Figure 4). First, the original distribution form 10 of the software program is taken apart by process 100 into its key components, namely installation program 20, read-only file set 50, read/write file set 51, core executable support files 40, generic executable system resources 41, and original core executable program 30.

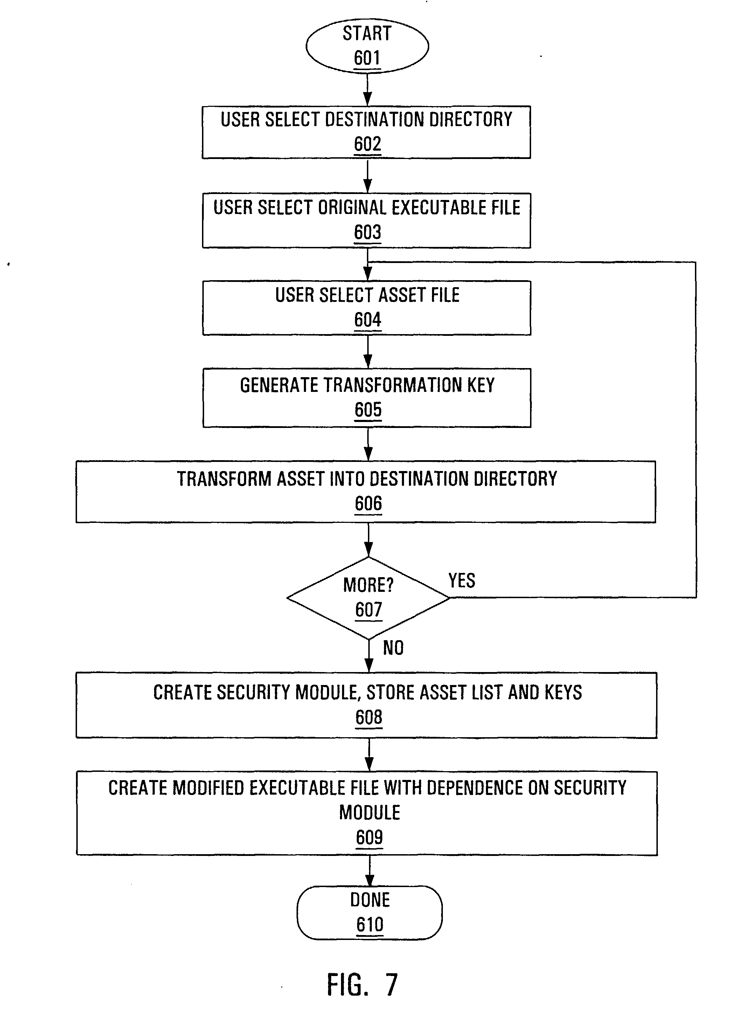

A software conversion program 101 is then run, (the logic of which is illustrated in the flow chart of Figure 7). This software program, typically with user input, selects specific asset files from the run-time non-executable components read-only file set 50, read/write file set 51. Software conversion program 101 will select transforming algorithms and keys for each chosen asset file. Then, the selected encryption algorithm for each file is applied, using the key for that particular file.

Modifications to the original core executable program 30 are also required. Specifically, the original core executable program 30 is transformed into modified executable program 30A which invokes protection module 31. For example, in the Windows™ environment, this could be accomplished by adding a reference to a DLL in an expanded version of the import table of original core executable program 30. Protection module 31 and file transformation module 70 must be added to the file-set. The transformation keys and asset list must also be added to the file-set. They could be stored as a separate file or, for security reasons, embedded in other files such as files 30A, 31 and/or 70.

Finally, modifications to the non-run-time components are also required. Specifically, the software program's installation program 20 must be enhanced to include the new and changed components described above, resulting in a modified installation program 20A.

When this process is complete there is a new set of run-time components, namely modified executable program 30A, protection module 31, file transformation module 70, and transformed file sets 50A and 51A. The components are then transferred to a CD-ROM 10A or other media using process 102 for distribution to the software user. These components will thereafter be invoked as necessary at application run-time.

It is immaterial to the present invention whether all the foregoing modifications are performed by software conversion program 101, or whether some conversions, such as those performed on the original core executable program 30 and/or installation program 20 are implemented by independent but related processes. It is also immaterial exactly what the nature of any other transforms are applied to produce the modified executable program 30A, as long as it invokes (usually via the protection module 31) file transformation module 70.

There are other ways in which the conversion of core executable program 30 into modified executable program 30A could be performed, and still effectively control the transformation behaviour of file transformation module 70. For example, the conversion process by which modified executable program 30A is created could add non-executable data to core executable program 30, such that this data could be found and inspected at run-time by file transformation module 70. This data could serve as a form of "license", the presence and contents of which would be used by file transformation module 70 in deciding whether to apply transformations to this particular program. In another alternative conversion mechanism, the conversion process could add to core executable program 30 an extra executable "callback" function. This function would not require any relationship to the pre-existing executable code of program 30, but would be called by file transformation module 70 when said module was determining whether to supply transformation services or not. In either of the variant embodiments described above, the first initialization of file transformation module 70 will not be invoked by core executable program 30 (or by protection module 31, if present). However, file transformation module 70 could be initialized by some alternative means, such as by the application installation program 20.

Figure 7 is a flow chart of the file transformation process shown in Figure 6. At step 601, the file transformation process is started. At step 602, the user selects the destination directory for the new set of run-time and non-run-time components, namely modified executable program 30A, protection module 31, file transformation module 70, transformed file sets 50A and 51A, and modified installation program 20A. At step 603, the user selects the core executable file (executable) to be transformed in accordance with the present invention. At step 604, the user also selects a data file to be transformed (also known as an "asset file"). At step 605, the software conversion program generates a transformation key. At step 606, the selected asset file is transformed using the transformation key, and is placed in the destination directory. Using decision step 607, steps 604-606 are repeated until there are no more asset files to transform. At this point the asset list and associated transformation key set is available and may be stored separately, or incorporated into other files.

At step 608, protection module 31 is retrieved and added, including optionally the aforementioned asset file and transformation key information. At step 609, a modified executable program 30A is created with dependence on the protection module 31. As previously discussed, such dependence would typically consist, in the Windows™ environment, of adding an import table reference to modified executable program 30A which refers to a protection DLL. Note that in one embodiment of this invention, the linking of original core executable program 30 to protection module 31 may be the only modification done to original core executable program 30 to produce modified executable program 30A. The file transformation process is completed at step 610.

The following is an example of the operation of the present invention according to an implementation of one embodiment.
1. A software publisher creates a software program for the Windows 95™ environment. An example would be a role-playing entertainment program with multiple levels . In this example, each level is represented by a 50-megabyte read-only data file (the assets). The core executable file is a .EXE file of 2 megabytes.
2. Using the steps shown in Figure 6, the software program is converted in accordance with the present invention, such that each data file 50 is transformed into a transformed data file, and a modified executable program 30A dependent on these transformed data files is also created.
3. This converted form of the software program is packaged and distributed to users on CD-ROM or other media.
4. A user installs and runs the software program.
5. Upon installation, the modified executable program 30A, modified read-only file-set 50A, protection module 31 and file transformation module 70 are all copied or made available to the user's computer. This is in addition to all of the components which would normally be in place for the software program in question. Protection module 31 could take the form of an Object Linking and Embedding (OLE) object, a separate executable file, or a Dynamically Linked Library (DLL) file. In the case of a file executable in conjunction with Windows 95™ or Windows 98™, the file transformation module 70 would optimally be a Windows Virtual Device Driver or VxD. In the present example, the read/write files, if any, of the software program would not be affected.
6. When the program is run, it presents the user with the first level of the software program. Of necessity, this means that the first level data file must be accessed and read by the modified executable program 30A. In accordance with the flow chart shown in Figure 5B, the initial file-OPEN operation triggers file transformation module 70 which determines that this particular combination of file and file-READing program is to have a transformation applied.
7. All subsequent file-READS to the level 1 data file invoke file transformation module 70, which, according to Figure 5B, allows the file system do the actual reading, and transforms the buffered file data in-place prior to it being make available, by the operating system 71, to the modified executable program 30A. While it is not common for such files to be read/write, writes could be similarly intercepted and transformed if required.
8. When the program exits, or the user moves to another level within the software program, the level 1 file is closed, at which time the transformation module 70 resets all information associated with that data file. Any subsequent manipulation of that file would have to be started with a file-OPEN operation, as required both by the local file system and by transformation module 70 according to this invention.

The above description of a preferred embodiment should not be interpreted in any limiting manner since variations and refinements can be made without departing from the spirit of the invention. The scope of the invention is defined by the appended claims and their equivalents.

## Claims

1. A computer system comprising:
(a) a memory for storing at least one transformed data file,
(b) a processor for executing an operating system, an executable program, and a file transformation module program which only provides transformation services to said executable program, said file transformation module program intercepting file operations from said executable program to said operating system, wherein upon the interception of a file operation, said file transformation module program retrieves transformed data from said at least one transformed data file, uses a transformation key to reverse transform said transformed data into its untransformed state, and forwards said data in its untransformed state to said executable program.

2. The computer system of claim 1 wherein said file operations include the file-OPEN file operation, the file-READ file operation, the file-WRITE file operation, and the file-CLOSE file operation.

3. The computer system of claim 2 wherein, upon the file-OPEN file operation, said file transformation module program assigns a unique file identifier for said at least one transformed data file and records said unique file identifier in an active file list.

4. The computer system of claim 3 wherein, upon file-READ and file-WRITE file operations, the file transformation module program checks the active file list to determine whether a reverse transformation is to be applied, and if not, returns said file operations to said operating system for normal processing.

5. The computer system as claimed in claim 3 or 4, wherein upon the closing of said transformed data file, the file transformation module program deletes said unique file identifier for said at least one transformed data file from said active file list.

6. The computer system as claimed in claim 1, 2, 3, 4 or 5, wherein said at least one transformed data file is a read-only file.

7. The computer system as claimed in claim 1, 2, 3, 4, 5 or 6, wherein said at least one transformed data file is a read/write file.

8. The computer system as claimed in claim 1, 2, 3, 4, 5, 6 or 7, wherein said executable program is embedded with a call to the execution of a protection module program that may only be invoked upon the execution of said executable program, said protection module program initializing said file transformation module upon first execution of said executable program.

9. The computer system of claim 8 wherein said transformation key is stored within said protection module program.

10. The computer system as claimed in claim 8 or 9, wherein said protection module program is a Dynamically Linked Library (DLL).

11. The computer system as claimed in claim 1, 2, 3, 4, 5, 6, 7, 8, 9 or 10, wherein said at least one transformed data file has been encrypted using one of the DES and RSA encryption algorithms.

12. The computer system as claimed in claim 1, 2, 3, 4, 5, 6, 7, 8, 9, 10 or 11, wherein non-executable license data is embedded in said executable program for ensuring that said file transformation module only provides transformation services to said executable program.

13. The computer system as claimed in claim 1, 2, 3, 4, 5, 6, 7, 8, 9, 10, 11 or 12, wherein executable program code is embedded in said executable program for ensuring that said file transformation module only provides transformation services to said executable program.

14. A method of generating, from a computer software application containing an executable program and one or more data files, a protected version of the computer software application comprising the steps of:
i. applying one or more transformation algorithms and transformation keys to transform one or more of the data files into one or more respective transformed data files;
ii. storing said transformation keys;
iii. retrieving a file transformation module program which only provides transformation services to said executable program; and
iv. transferring said one or more respective transformed data files, transformation keys, executable program, and file transformation module program to a medium for distribution to a user.

15. The method of claim 14 further including the step of modifying said executable program by embedding into said executable program a call to the execution of a protection module program that may only be invoked upon the execution of said executable program, said protection module program initializing said file transformation module upon first execution of said executable program.

16. The method of claim 15 wherein the step of storing said transformation keys includes the step of embedding said transformation keys in said protection module program.

17. The method as claimed in claim 15 or 16, wherein said protection module program is a Dynamically Linked Library (DLL).

18. The method as claimed in claim of claim 14, 15, 16 or 17, wherein said transformation algorithms are selected from one of the DES and RSA encryption algorithms.

19. The method as claimed in claim 14, 15, 16, 17 or 18, further including the step of embedding non-executable license data in said executable program for ensuring that said file transformation module only provides transformation services to said executable program.

20. The method as claimed in claim 14, 15, 16, 17, 18 or 19, further including the step of embedding executable program code in said executable program for ensuring that said file transformation module only provides transformation services to said executable program.

21. A machine-readable medium comprising an executable program, at least one transformed data file, at least one transformation key, and a file transformation module program which only provides transformation services to said executable program, and when said executable program and said file transformation module program are run on a computer system, said file transformation module program intercepting file operations from said executable program to said computer system's operating system, wherein upon the interception of a file operation, said file transformation module program retrieving transformed data from said at least one transformed data file, using said at least one transformation key to reverse transform said transformed data into its untransformed state, and forwarding said data in its untransformed state to said executable program.

22. The machine-readable medium of claim 21 wherein said file operations include the file-OPEN file operation, the file-READ file operation, the file-WRITE file operation, and the file-CLOSE file operation.

23. The machine-readable medium of claim 22 wherein, upon the interception of a file-OPEN file operation, said file transformation module program assigns a unique file identifier for said at least one transformed data file and records said unique file identifier in an active file list.

24. The machine-readable medium of claim 23 wherein upon the interception of a file-READ file operation or a file-WRITE file operation, the file transformation module program checks the active file list to determine whether a reverse transformation is to be applied, and if not, returns said file operations to said operating system for normal processing.

25. The machine-readable medium as claimed in claim 23 or 24, wherein, when run on a computer system, the file transformation module program, upon the closing of said at least one transformed data file, deletes said unique file identifier for said at least one transformed data file from said active file list.

26. The computer system as claimed in claim 21, 22, 23, 24 or 25, wherein said at least one transformed data file is a read-only file.

27. The computer system as claimed in claim 21, 22, 23, 24, 25 or 26, wherein said at least one transformed data file is a read/write file.

28. The computer system as claimed in claim 21, 22, 23, 24, 25, 26 or 27, wherein said executable program is embedded with a call to the execution of a protection module program that may only be invoked upon the execution of said executable program, said protection module program initializing said file transformation module upon first execution of said executable program.

29. The computer system of claim 28 wherein said at least one transformation key is embedded in said protection module program.

30. The computer system as claimed in claim 28 or 29, wherein said protection module program is a Dynamically Linked Library (DLL).

31. The computer system as claimed in claim 21, 22, 23, 24, 25, 26, 27, 28, 29 or 30, wherein said at least one transformed data file has been encrypted using one of the DES and RSA encryption algorithms.

32. The computer system as claimed in claim 21, 22, 23, 24, 25, 26, 27, 28, 29, 30 or 31, wherein non-executable license data is embedded in said executable program for ensuring that said file transformation module only provides transformation services to said executable program.

33. The computer system as claimed in claim 21, 22, 23, 24, 25, 26, 27, 28, 29, 30, 31 or 32, wherein executable program code is embedded in said executable program for ensuring that said file transformation module only provides transformation services to said executable program.

34. A computer system comprising:
(a) a memory for storing at least one transformed data file,
(b) a processor for executing an operating system and a modified executable program, said modified executable program being modified to invoke a file transformation module program which only provides transformation services to said modified executable program, said file transformation module program intercepting file operations from said modified executable program to said operating system, wherein upon the interception of a file operation, said file transformation module program retrieves transformed data from said at least one transformed data file, uses a transformation key to reverse transform said transformed data into its untransformed state, and forwards said data in its untransformed state to said modified executable program.

35. The computer system of claim 34 wherein said file operations include the file-OPEN file operation, the file-READ file operation, the file-WRITE file operation, and the file-CLOSE file operation.

36. The computer system of claim 35 wherein, upon the file-OPEN file operation, said file transformation module program assigns a unique file identifier for said at least one transformed data file and records said unique file identifier in an active file list.

37. The computer system of claim 36 wherein upon file-READ and file-WRITE file operations, the file transformation module program checks the active file list to determine whether a reverse transformation is to be applied, and if not, returns said file operations to said operating system for normal processing.

38. The computer system as claimed in claim 36 or 37, wherein upon the closing of said transformed data file, the file transformation module program deletes said unique file identifier for said at least one transformed data file from said active file list.

39. The computer system as claimed in claim 34, 35, 36, 37 or 38, wherein said at least one transformed data file is a read-only file.

40. The computer system as claimed in claim 34, 35, 36, 37, 38 or 39, wherein said at least one transformed data file is a read/write file.

41. The computer system as claimed in claim 34, 35, 36, 37, 38, 39 or 40, wherein said modified executable program is embedded with a call to the execution of a protection module program that may only be invoked upon the execution of said modified executable program, said protection module program initializing said file transformation module upon first execution of said modified executable program.

42. The computer system of claim 41 wherein said transformation key is stored within said protection module program.

43. The computer system as claimed in claim 41 or 42, wherein said protection module program is a Dynamically Linked Library (DLL).

44. The computer system as claimed in claim 34, 35, 36, 37, 38, 39, 40, 41, 42 or 43, wherein said at least one transformed data file has been encrypted using one of the DES and RSA encryption algorithms.

45. The computer system as claimed in claim 34, 35, 36, 37, 38, 39, 40, 41, 42, 43 or 44, wherein non-executable license data is embedded in said modified executable program for ensuring that said file transformation module only provides transformation services to said modified executable program.

46. The computer system as claimed in claim 34, 35, 36, 37, 38, 39, 40, 41, 42, 43, 44 or 45, wherein executable program code is embedded in said modified executable program for ensuring that said file transformation module only provides transformation services to said modified executable program.
